# EUROPEAN PATENT APPLICATION

(11) **EP 1 760 816 A2**
(43) Date of publication of application: **07.03.2007**
(21) Application number: 06119802.4
(22) Date of filing: 30.08.2006
(51) Int. Cl.: H01M 8/04, H01M 8/10

(54) **Method and apparatus for water management in direct methanol fuel cell system using heat exchanger**

(30) Priority: 31.08.2005 KR 20050080989; 28.09.2005 KR 20050090736
(71) Applicant: Samsung SDI Co., Ltd., Suwon-si, Gyeonggi-do (KR)
(72) Inventor: Suh, Jun Won, Samsung SDI Co., Ltd, Yongin-si, Gyeonggi-do (KR); Lee, Jong Ki, Samsung SDI Co., Ltd, Yongin-si, Gyeonggi-do (KR); Ju, Ri A, Samsung SDI Co., Ltd, Yongin-si, Gyeonggi-do (KR); Lee, Dong Yun, Samsung SDI Co., Ltd, Yongin-si, Gyeonggi-do (KR); Cho, Eun Suk, Samsung SDI Co., Ltd, Yongin-si, Gyeonggi-do (KR); Choi, Sang Hyeon, Samsung SDI Co., Ltd, Yongin-si, Gyeonggi-do (KR); An, Jin Hong, Samsung SDI Co., Ltd, Yongin-si, Gyeonggi-do (KR); Jang, Won Hyouk, Samsung SDI Co., Ltd, Yongin-si, Gyeonggi-do (KR)
(74) Representative: Read, Matthew Charles

(57) **Abstract**

A method and an apparatus for water management in a direct methanol fuel cell system using a heat exchanger (170) and including a pipe (122) for connecting a cathode outlet of a fuel cell stack with a mixer. The method includes: measuring an output voltage and/or an output current (213) of the fuel cell stack; extracting a concentration value of the mixed fuel corresponding to the measured output voltage and/or current from a look-up table (207); comparing the extracted concentration value of the mixed fuel with a reference concentration value; and forcibly cooling a fluid flowing in the pipe (122) for a time period by a heat exchanger (170) coupled to the pipe when the extracted concentration value of the mixed fuel is higher than the reference concentration value.

## Description

The present invention relates to a method and an apparatus for water management in a direct methanol fuel cell system using a heat exchanger, for supplying fuel having a desired concentration to a fuel cell stack so as to get a stable and continuous operation.

A fuel cell is a power generation system that generates electric energy by using an electrochemical reaction between oxygen contained in air and hydrogen contained in a hydrocarbonaceous material such as methanol, ethanol, natural gas, etc.

A fuel cell can be categorized as a phosphate fuel cell, a molten carbonate fuel cell, a solid oxide fuel cell, a polymer electrolyte membrane fuel cell (PEMFC), an alkaline fuel cell, etc., according to the kinds of electrolytes used.

A direct methanol fuel cell (DMFC) is similar to a typical PEMFC because it uses a polymer electrolyte. However, the DMFC differs from the typical PEMFC because it does not need to use a reformer to supply liquid fuel such as methanol to its stack, while the typical PEMFC needs to use the reformer to supply fuel to its stack. Since the DMFC does not need to use the reformer, it can be small in size as compared with the typical PEMFC.

A DMFC includes a stack, a fuel tank, and a fuel pump. In the stack, a fuel containing hydrogen and an oxidant, such as oxygen, air, etc., are electrochemically reacted to generate electric energy. The stack has a structure in which dozens to hundreds of unit cells are stacked adjacent to one of another. Each of the unit cells includes a membrane electrode assembly (MEA) and a separator. Here, the membrane electrode assembly includes an anode electrode, a cathode electrode, and a polymer electrolyte membrane between the anode electrode and the cathode electrode.

In the DMFC, depending on a molarity (or concentration) of the fuel supplied to the anode and cathode electrodes, an operation efficiency of the DMFC can widely vary. For example, when the molarity of the fuel supplied to the anode electrode is high, the amount of the fuel supplied from the anode electrode to the cathode electrode increases due to a limitation of the polymer electrolyte membrane, and therefore the fuel in the cathode electrode causes a counter electromotive reaction (or force), thereby decreasing an output voltage of the DMFC. Thus, according to the structures and characteristics of the stack of the DMFC, the DMFC should have an optimum operation efficiency at a certain (or predetermined) molarity of the fuel. Therefore, the molarity of the fuel should be properly (or suitably) adjusted in order to stably and continuously operate the DMFC.

Accordingly, it is an aspect of the present invention to provide a method and an apparatus for water management in a direct methanol fuel cell system using a heat exchanger, which can effectively supply fuel having a desired concentration to a fuel cell stack so as to get a stable and continuous operation.

The invention is defined in its broad aspects in claim 1 and 8 hereinafter.

An embodiment of the present invention provides a method for water management in a direct methanol fuel cell system including a mixer for supplying an anode electrode of a fuel cell stack with a mixed fuel, the mixed fuel including an unreacted fuel and water coming out from the fuel cell stack and a high concentration fuel supplied from a fuel feeder. The method includes: measuring an output voltage and/or an output current of the fuel cell stack; extracting a concentration value of the mixed fuel corresponding to the measured output voltage and/or current from a look-up table; comparing the extracted concentration value of the mixed fuel with a reference concentration value; and forcibly cooling a fluid flowing in a pipe for a time period by a heat exchanger coupled to the pipe when the extracted concentration value of the mixed fuel is higher than the reference concentration value, wherein the pipe is for connecting a cathode outlet of the fuel cell stack with the mixer.

Another embodiment of the present invention provides a method for water management in a direct methanol fuel cell system including a circulator for storing an unreacted fuel and water coming out from a fuel cell stack, and a mixer for providing a mixed fuel by mixing a low concentration fuel from the circulator and a high concentration fuel from a fuel feeder and for supplying the mixed fuel to the fuel cell stack. The method includes: sensing a concentration of the low concentration fuel; comparing a concentration value of the low concentration fuel corresponding to the sensed concentration with a reference concentration value; and forcibly cooling fluid flowing in a pipe for a time period by a heat exchanger coupled to the pipe when the extracted concentration value of the low concentration fuel is higher than the reference concentration value, wherein the pipe is for connecting a cathode outlet of the fuel cell stack with the circulator.

Still another embodiment of the present invention provides an apparatus for water management in a direct methanol fuel cell system including a mixer for supplying an anode electrode of a fuel cell stack with a mixed fuel, the mixed fuel including an unreacted fuel and water coming out from the fuel cell stack and a high concentration fuel supplied from a fuel feeder. The apparatus includes: a heat exchanger adjacent to a pipe connecting a cathode outlet of the fuel cell stack with the mixer, and for condensing fluid passing through the pipe; and a controller for measuring an output voltage and/or current of the fuel cell stack, for extracting a concentration value of the mixed fuel corresponding to the measured output voltage and/or current from a previously stored look-up table, and for increasing an amount of fluid condensation by operating the heat exchanger when the extracted concentration value of the mixed fuel is higher than a previously stored reference concentration value.

The accompanying drawings, together with the specification, illustrate exemplary embodiments of the present invention, and, together with the description, serve to explain the principles of the present invention.
Figure 1 is a block diagram of a direct methanol fuel cell system employing a water management method according to an embodiment of the present invention;
Figure 2 is a flowchart of the water management method of the direct methanol fuel cell system of Figure 1;
Figure 3 is a block diagram of a direct methanol fuel cell system employing a water management method according to another embodiment of the present invention;
Figure 4 is a flowchart of the water management method of the direct methanol fuel cell system of Figure 3; and
Figure 5 is a block diagram of a controller employed in a water management apparatus of a direct methanol fuel cell system according to an embodiment of the present invention.

In the following detailed description, only certain exemplary embodiments of the present invention are shown and described, by way of illustration. As those skilled in the art will recognize, the described exemplary embodiments may be modified in various ways, all without departing from the scope of the present invention. Accordingly, the drawings and description are to be regarded as illustrative in nature, and not restrictive.

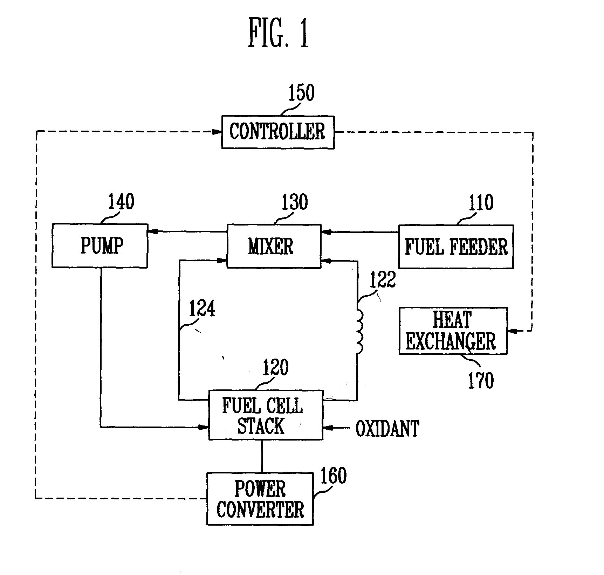

Figure 1 is a block diagram of a direct methanol fuel cell system employing a water management method according to an embodiment of the present invention.
Referring to Figure 1, the direct methanol fuel cell system includes a fuel feeder 110, a fuel cell stack 120, a mixer 130, a pump 140, a controller 150, a power converter 160, and a heat exchanger 170. The fuel feeder 110 includes a fuel tank and a pump to supply high concentration fuel stored in the fuel tank to the mixer 130.

The fuel cell stack 120 has a structure in which dozens to hundreds of unit cells are stacked adjacent to one another. Each of the unit cells includes a membrane electrode assembly (MEA) and a separator (or bipolar plate). Here, the membrane electrode assembly includes an anode electrode, a cathode electrode, and a polymer electrolyte membrane between the anode electrode and the cathode electrode. The fuel cell stack 120 uses a mixed fuel supplied to the anode electrode and an oxidant supplied to the cathode electrode to generate electricity. Here, the mixed fuel includes a fuel contain hydrogen, such as methanol, and the oxidant can be air, oxygen, etc. Further, an effluent from the cathode electrode of the fuel cell stack 120 is introduced into the mixer 130 through a first pipe 122, and an effluent from the anode electrode of the fuel cell stack 120 is introduced into the mixer 130 through a second pipe 124.

The mixer 130 stores the mixed fuel in which unreacted fuel and water introduced from the fuel cell stack 120 are mixed with a high concentration fuel supplied from the fuel feeder 110. Further, the mixer 130 can have a mechanism for discharging an undesired gas, such as carbon dioxide, introduced from the fuel cell stack 120, etc. The mixed fuel stored in the mixer 130 is supplied to the anode electrode of the fuel cell stack 120 through the pump 140.

The controller 150 includes a memory adapted to store a program, and a central processing unit connected to the memory and for controlling the fuel cell system based on the program. Further, the controller 150 controls the memory to store reference concentration values for the mixed fuel, in which the reference concentration values are determined according to structures and characteristics of the fuel cell stack 120.

Also, the controller 150 controls the memory to store concentration values of the mixed fuel corresponding to output voltages and/or output currents of the fuel cell stack 120. For example, the stored concentration values of the mixed fuel are provided as a look-up table in which various estimated concentration values are tabulated to correspond to various output voltages and/or various output currents.

The controller 150 receives an electric signal having a level (or a predetermined level) corresponding to an output voltage and/or an output current of the fuel cell stack 120 from the power converter 160. The received electric signal is converted by the controller 150 into a fuel concentration value (or a predetermined concentration value) corresponding to the output voltage and/or the output current, and the concentration value is used in controlling the heat exchanger 170.
The power converter 160 supplies an electric power to the controller 150, the pump 140, or an external load, while the fuel cell stack 120 operates in a normal manner. In addition, the power converter 160 transmits the output voltage and/or the output current of the fuel cell stack 120 to the controller 150.

The heat exchanger 170 is provided adjacent to the first pipe 122 connecting the fuel cell stack 120 with the mixer 130. Here, the heat exchanger 170 is controlled to be turned on or to be turned off based on a control signal from the controller 150. In one embodiment, the heat exchanger 170 is implemented by a fan used in controlling a system temperature. The fan can blow air toward the first pipe 122. In this case, to enhance a forcible cooling effect of fluid (or air) passing through the first pipe 122 by the fan, the first pipe 122 is partially or wholly shaped as a spiral, a coil, etc. In one embodiment, at least a part of the first pipe 122, which is opposite to a propeller of the fan of the heat exchanger 170, is shaped as a spiral, a coil, etc.

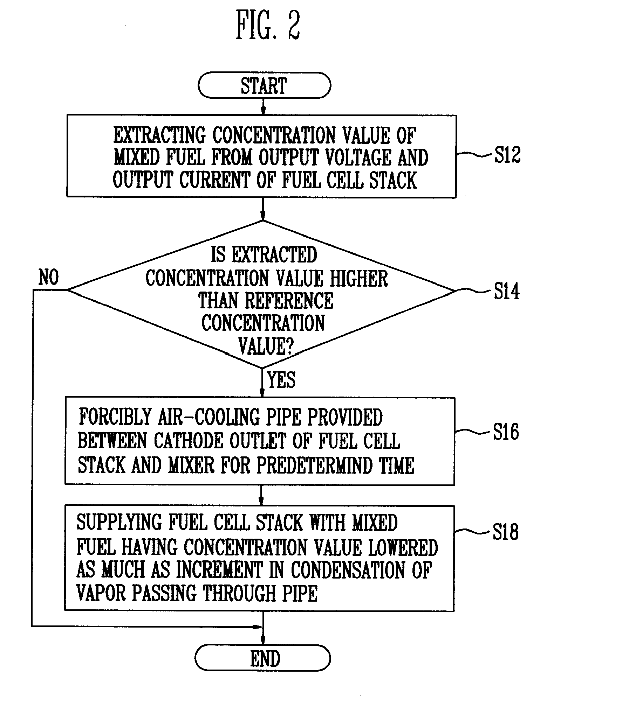

Figure 2 is a flowchart of the water management method of the direct methanol fuel cell system of Figure 1.
Referring to Figure 2, in the water management method for the direct methanol fuel cell system, at operation S12, the controller 150 senses the output voltage and/or the output current of the fuel cell stack 120, and extracts a concentration value of the mixed fuel corresponding to the sensed signal from a previously stored look-up table. Here, the look-up table previously stores various estimated concentration values of the mixed fuel corresponding to various output voltages and/or various output currents of the fuel cell stack 120. Further, the look-up table can be tabulated according to the characteristics of the fuel cell stack 120.

Then, at operation S14, it is determined whether or not the extracted concentration value of the mixed fuel is higher than the reference concentration value. When the extracted concentration value of the mixed fuel is higher than the reference concentration value, fluid passing through the first pipe 122 connecting a cathode outlet of the fuel cell stack 120 with the mixer 130 is forcibly cooled for a cooling time period (or a predetermined time period), at operation S16. Here, the cooling time period is determined depending on a difference between the extracted concentration value of the mixed fuel and the reference concentration value. For example, when a difference between the extracted concentration value of the mixed fuel and the reference concentration value is large, the fan is turned on for a relative long time period proportional to the difference between the extracted concentration value of the mixed fuel and the reference concentration value.

By contrast, when the extracted concentration value of the mixed fuel is lower than the reference concentration value, the heat exchanger 170 does not operate and the current operation is stopped. Since the heat exchanger 170 does not operate, external air is not supplied from the heat exchanger 170 to the pipe 122. Additionally, in the case where the heat exchanger 170 is also used for controlling the system temperature (and should not be stopped), a blocking mechanism or the like may be provided to block or prevent the external air from being supplied from the heat exchanger 170 to the pipe 122, so that the fluid passing through (or within) the pipe 122 between the cathode outlet of the fuel cell stack 120 and the mixer 130 is not substantially affected by the heat exchanger 170. Furthermore, when the extracted concentration value of the mixed fuel is lower than the reference concentration value, the fuel feeder 110 can be controlled to increase the amount of the high concentration fuel supplied from the fuel feeder 110 for a time period (or a predetermined time period).

In addition, when the extracted concentration value of the mixed fuel is equal to the reference concentration value, the current operation can be stopped without performing an additional process (such as without increasing the amount of the high concentration fuel supplied from the fuel feeder 110).
In view of the foregoing operations, the condensation of water vapor passing through the first pipe is increased, and the amount of water introduced into the mixer is increased as much as the increased condensation, so that the concentration of the fuel in the mixer is correspondingly lowered. Thus, at operation S18, the mixed fuel having a desired concentration is supplied to the fuel cell stack 120. With the foregoing configuration, the heat exchanger 170 is used for effectively managing the water produced in the fuel cell stack 120, so that the fuel having the desired concentration can be supplied to the fuel cell stack 120.

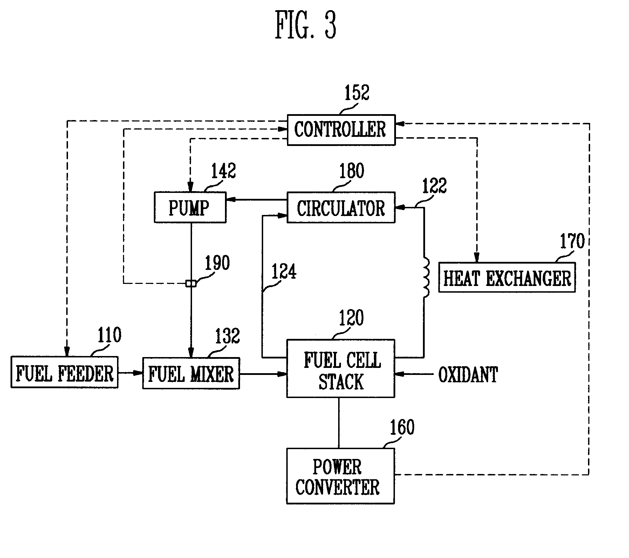

Figure 3 is a block diagram of a direct methanol fuel cell system employing a water management method according to another embodiment of the present invention.
Referring to Figure 3, the direct methanol fuel cell system includes a fuel feeder 110, a fuel cell stack 120, a fuel mixer 132, a pump 142, a controller 152, a power converter 160, a heat exchanger 170, a circulator 180, and a concentration sensor 190.

The fuel cell stack 120 includes an anode electrode and a cathode electrode and generates electric energy by electrochemical reaction between a fuel containing hydrogen supplied to the anode electrode and an oxidant supplied to the cathode electrode. Here, an effluent from the cathode electrode of the fuel cell stack 120 is introduced into the circulator 180 through a first pipe 122, and an effluent from the anode electrode of the fuel cell stack 120 is introduced into the circulator 180 through a second pipe 124. The unreacted fuel and water introduced into the circulator 180 are supplied as a low concentration fuel to the fuel mixer 132 through the pump 142. The low concentration fuel supplied to the fuel mixer 132 is mixed with a high concentration fuel supplied from the fuel feeder 110, and then supplied back to the anode electrode of the fuel cell stack 120.

The circulator 180 stores the unreacted fuel from an anode outlet of the fuel cell stack 120 and discharges a reaction product, such as carbon dioxide or the like. Further, the circulator 180 stores water from a cathode outlet of the fuel cell stack 120 and discharges an unwanted gas, such as nitrogen, oxygen, etc. Also, the circulator 180 employs the pump 142 to supply the low concentration fuel obtained by mixing the unreacted fuel with water to the fuel mixer 132. In one embodiment, the circulator 180 includes a lower part in which the effluent from the anode electrode is introduced, an upper part in which the effluent from the cathode electrode is introduced, and a selective permeable membrane to allow gas and liquid to permeate the upper part and the lower part, respectively.

The fuel mixer 132 includes a tank or the like, in which the high concentration fuel from the fuel feeder 110 and the low concentration fuel from the circulator 180 are mixed and stored. The fuel mixer 132 has a structure to smoothly (or uniformly) mix the high concentration fuel and the low concentration fuel together (without lumps). For example, in one embodiment, the fuel mixer 132 has a mixing tank structure in which the high concentration fuel and the low concentration fuel are mixed while passing through a resin or a filter.

The controller 152 includes a memory adapted to store a program, and a central processing unit connected to the memory and for controlling the fuel cell system based on the program. Further, the controller 152 controls the memory to store reference concentration values for the mixed fuel, in which the reference concentration values are determined according to structures and characteristics of the fuel cell stack 120. Also, the controller 152 controls the memory to store estimated concentration values of the low concentration fuel corresponding to output voltages and/or output currents of the fuel cell stack 120. For example, the stored concentration values of the low concentration fuel are provided as a look-up table in which estimated various concentration values are tabulated corresponding to various output voltages and/or various output currents of the fuel cell stack.

Further, the controller 152 receives an electric signal having a level (or a predetermined level) corresponding to the concentration value of the low concentration fuel from the concentration sensor 190. Also, the controller 152 controls the heat exchanger 170 to be turned on or off based on the concentration value of the low concentration fuel corresponding to the received electric signal. As described above, the controller 152 measures the output voltage and/or the output current of the fuel cell stack 120 by the power converter 160, and controls the heat exchanger 170 to be turned on or off according to the concentration values of the low concentration fuel corresponding to the measured signal. Further, the controller 152 controls the pump 142 and/or the fuel feeder 110.

The heat exchanger 170 is provided adjacent to the first pipe 122 connecting the fuel cell stack 120 with the circulator 180, and is used in forcibly cooling the fluid passing through (or within) the first pipe 122. Here, the heat exchanger 170 is controlled by the controller 152 to be turned on or off according to the sensed concentration of the fuel, thereby setting the concentration of the fuel supplied to the anode electrode of the fuel cell stack 120 into a desired concentration. In one embodiment, the heat exchanger 170 can be implemented by a fan, but the present invention is not thereby limited. For example, the heat exchanger 170 can be implemented by surrounding the first pipe 122 with another pipe through which heat exchanging fluid flows.

The concentration sensor 190 senses the concentration of the low concentration fuel supplied from the circulator 180 to the fuel mixer 132. In other words, the concentration sensor 190 senses the concentration of the low concentration fuel, and transmits an electric signal corresponding to the sensed concentration to the controller 152. Here, the electric signal can pass through a device, such as an amplifier or the like, before being transmitted to the controller 152. Here, the concentration sensor 190 is placed in a fuel transferring pipe connecting the circulator 180 and the fuel mixer 132. Alternatively, the concentration sensor 190 may be internally provided in the circulator 180. The concentration sensor 190 can be implemented by a sensor using an ionic conduction polymer resin, a complex resin, etc., in which the volume is varied according to the concentration of the fuel, such as methanol.

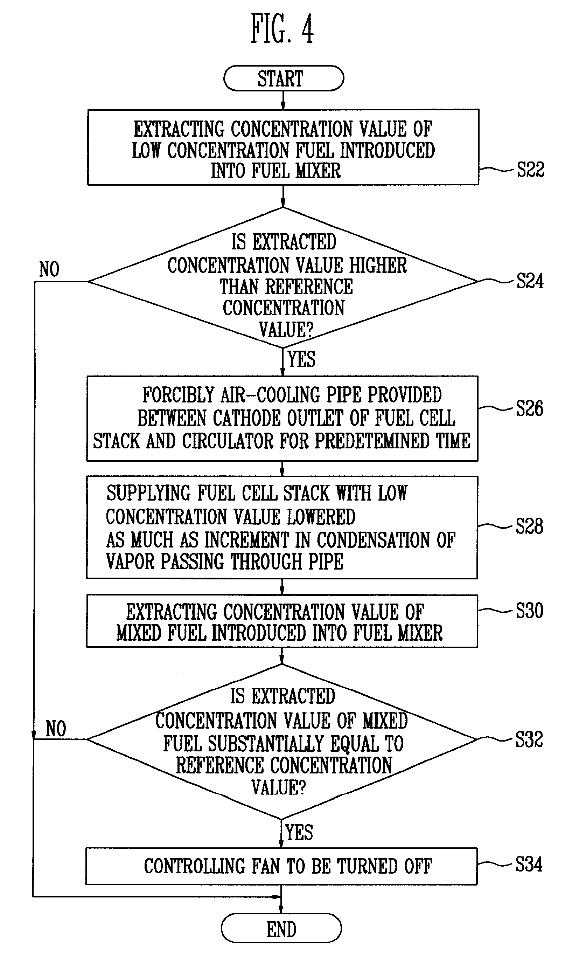

Figure 4 is a flowchart of the water management method of the direct methanol fuel cell system of Figure 3.
Referring to Figure 4, in the water management method for the direct methanol fuel cell system, at operation S22, the controller 152 receives a first electric signal regarding the concentration of the low concentration fuel from the concentration sensor 190 that senses the concentration of the low concentration fuel stored in the circulator 180 and supplied to the fuel mixer 130, and extracts a concentration value of the low concentration fuel corresponding to the received first electric signal from a previously stored first look-up table. Here, the first look-up table previously stores the concentrations sensed by the concentration sensor 190 and the levels of electric signals corresponding to the concentrations of the fuel.

Then, at operation S24, the controller 152 determines whether or not the extracted concentration value of the low concentration fuel is higher than the reference concentration value of the low concentration fuel while referring to the reference concentration values of the low concentration fuel stored in the memory. When the extracted concentration value of the low concentration fuel is higher than the reference concentration value, the fluid passing through (or within) the first pipe 122 provided between a cathode outlet of the fuel cell stack 120 and the circulator 180 is forcibly cooled for a on-time period (or a predetermined time period), at operation S26. Here, the on-time period of the heat exchanger 170 is determined depending on a difference between the extracted concentration value of the low concentration fuel and the reference concentration value. For example, the heat exchanger 170 is turned on for a relatively long time when the extracted concentration value of the low concentration fuel is different from the reference concentration value by a relatively large amount.

By contrast, when the extracted concentration value of the low concentration fuel is lower than the reference concentration value, the current operation is stopped. In addition, when the extracted concentration value of the low concentration fuel is lower than the reference concentration value, the pump 142 supplying the fuel mixer 132 with the low concentration fuel is controlled to decrease the amount of the low concentration fuel supplied from the circulator 180 to the fuel mixer 132 for a time period (or a predetermined time period).

Moreover, when the extracted concentration value of the low concentration fuel is equal to the reference concentration value, the current operation can be stopped without performing an additional process (such as without decreasing the amount of the low concentration fuel supplied).
In view of the foregoing operations, the condensation of water vapor passing through the first pipe is increased, and the amount of water introduced into the mixer is increased as much as the increased condensation. Therefore, the concentration of the low concentration fuel in the circulator is lowered, so that the low concentration fuel having the desired low concentration can be supplied by the pump 142 to the fuel mixer 132, at operation S28.

Then, at operation S30, the concentration of the mixed fuel introduced into the fuel cell stack 120 is extracted. For example, the concentration value of the mixed fuel corresponding to the output voltage and/or the output current of the fuel cell stack 120 is extracted from a second look-up table previously stored in the controller 152. Here, the second look-up table previously stores the concentration values of the mixed fuel corresponding to the output voltages and/or the output currents of the fuel cell stack.

Also, the concentration of the mixed fuel can be extracted by using a concentration sensor similar to the sensor 190 for sensing the concentration of the low concentration fuel.

Then, at operation S32, it is determined whether or not the extracted concentration value of the mixed fuel is substantially equal to the previously stored reference concentration value of the mixed fuel. When the extracted concentration value of the mixed fuel is substantially equal to the reference concentration value of the mixed fuel, at operation S34, a fan forcibly cooling the fluid flowing in the first pipe 122 is turned off.

With this configuration, the vapor and water coming out from the cathode electrode of the fuel cell stack are effectively controlled by the heat exchanger, thereby supplying the fuel having a desired concentration to the fuel cell stack.

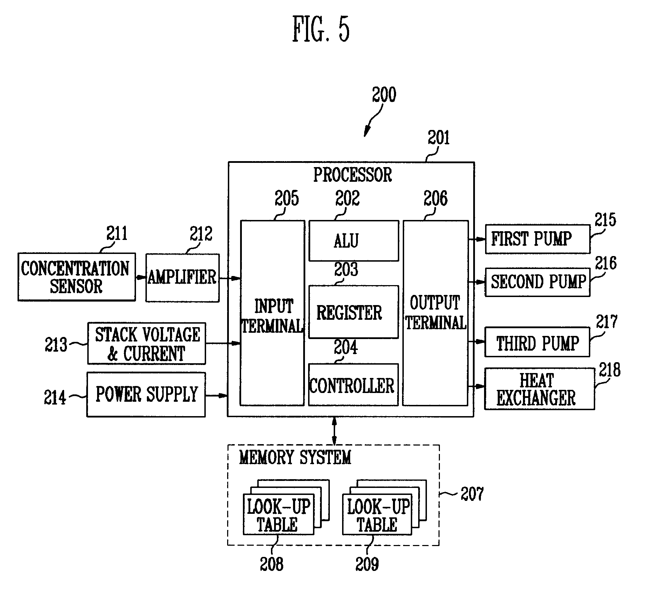

Figure 5 is a block diagram of a controller 500 employed in a water management apparatus of a direct methanol fuel cell system according to an embodiment of the present invention.
Referring to Figure 5, the controller 200 includes a memory system 207 for storing a program that controls various elements of a fuel cell system, in particular, a direct methanol fuel cell system, in order to manage water of the direct methanol fuel cell system; and a processor 201 connected to the memory system 207 and executing the program.

For example, the processor 201 includes an arithmetic logic unit (ALU) 202 to perform one or more calculations, a register to temporarily store data and command(s), and a controller 204 to control operation(s) of the fuel cell system. Further, the processor 201 includes one or more of processors having various architectures, such as Alpha of Digital; MIPS technology; MIPS of NEC, IDT, Siemens, etc.; x86 of Intel & Cyrix, AMD and Nexgen; and Power PC of IBM and Motorola.
Further, the processor 201 receives electric power from the fuel cell stack and/or a separate power supply 214; measures the output voltage and/or current 213 of the fuel cell stack, and receives an electric signal about the fuel concentration from the concentration sensor 211 via an amplifier 212. Here, the received signal is transmitted to the processor 201 through an input terminal 205 (e.g., analog-digital converter).

Further, the processor 201 controls a first pump 215, a second pump 216 and a third pump 217 which are used in the fuel feeder, the oxidant feeder, etc. Also, the processor 201 controls a driver to drive the respective pumps 215, 216, and 217, or directly controls the pumps 215, 216, and 217 through a frequency or the like. Also, the processor 201 controls a heat exchanger 218 based on the output voltage and/or current of the fuel cell stack or based on the fuel concentration sensed by a concentration sensor 211.
The memory system 207 includes a high speed main memory, such as a random access memory (RAM), a read only memory (ROM), etc.; an auxiliary memory for term storage, such as a floppy disk, a hard disk, a magnetic tape, a compact disk (CD)-read only memory (ROM), a flash memory, etc.; and a device for storing data using electric storage media, magnetic media, optic media, or the like. Here, the main memory may include a video memory that displays an image through a display device.

Further, the memory system 207 includes a look-up table 208 for storing the output voltages and/or currents of the fuel cell stack and fuel concentration values corresponding thereto; and a look-up table 209 for storing the electric signals input from the concentration sensor 211 and the concentration values of the low concentration fuel corresponding thereto. The look-up tables 208 and 209 are referred in controlling the operations of the heat exchanger 218. Further, the memory system 207 stores the reference concentration values of the mixed fuel and the reference concentration values of the low concentration fuel. Here, the reference concentration values are previously set according to the characteristics of the fuel cell stack in order to optimize the operation efficiency of the fuel cell stack.
In view of the foregoing, a water management apparatus according to an embodiment of the present invention controls a heat exchanger based on an output voltage and/or an output current of a fuel cell stack and/or based on a concentration of a low concentration fuel sensed by a concentration sensor, so that a mixed fuel having a desired concentration is supplied to the fuel cell stack, thereby operating the fuel cell stack stably and continuously (for a long time).

Further, in a foregoing embodiment of a direct methanol fuel cell system, a heat exchanger provided adjacent to a pipe connected to a cathode outlet of a fuel cell stack is used to control an amount of fluid condensation (or a condensing amount of a fluid) coming out from a cathode electrode of the fuel cell stack, so that water is efficiently managed and the direct methanol fuel cell system is stably and continuously operated. In addition, the heat exchanger (or another heat exchanger) may be provided adjacent to an anode outlet as well as the cathode outlet of the fuel cell stack, so that the unreacted fuel coming out from the anode electrode of the fuel cell stack can be effectively recovered.
As described above, in a direct methanol fuel cell system including parts for recycling an effluent of a fuel cell stack, such as a mixer, a circulator, a fuel mixer, etc., a heat exchanger is used in efficiently controlling water coming out from a cathode electrode of the fuel cell stack, so that a fuel having a desired concentration is supplied to the fuel cell stack, thereby enhancing an operation efficiency of the fuel cell system, and to stably and continuously operate the direct methanol fuel cell system.

While the invention has been described in connection with certain exemplary embodiments, it is to be understood by those skilled in the art that the invention is not limited to the disclosed embodiments, but, on the contrary, is intended to cover various modifications included within the scope of the appended claims.

## Claims

1. A method of water management in a direct methanol fuel cell system comprising a mixer that supplies an anode electrode of a fuel cell stack with mixed fuel comprising unreacted fuel and water coming out from a cathode outlet of the fuel cell stack and high concentration fuel supplied from a fuel feeder, the method comprising:
determining a concentration value for the mixed fuel;
comparing the determined concentration value with a reference concentration value; and
forcibly cooling fluid flowing from the cathode outlet of the fuel cell stack to the mixer, using a heat exchanger, when the determined concentration value of the mixed fuel is higher than the reference concentration value, whereby to change the mixed fuel concentration utilising water from the cathode outlet.

2. A method according to claim 1 including determining the concentration value for the mixed fuel as a function of the measured output voltage and/or current;

3. A method according to claim 2 wherein said determining of the concentration value of the mixed fuel comprises extracting the concentration value for the mixed fuel corresponding to the measured output voltage and/or current from a look up table.

4. The method according to any preceding claim, wherein the forcibly cooling the fluid comprises turning on the heat exchanger to supply external air to an exposed part of a conduit through which the fluid flows.

5. The method according to any preceding claim, further comprising:
stopping the heat exchanger from forcibly cooling when the determined concentration value of the mixed fuel is not higher than the reference concentration value.

6. The method according to any preceding claim, further comprising:
increasing an amount of a high concentration fuel supplied from the fuel feeder when the determined concentration value of the mixed fuel is lower than the reference concentration value.

7. The method according to claim 5, wherein the stopping the heat exchanger from forcibly cooling comprises blocking the heat exchanger from supplying external air to the exposed part of the pipe while leaving the heat exchanger turned on.

8. A direct methanol fuel cell system comprising:
a mixer (130, 132) for supplying an anode electrode of a fuel cell stack with mixed fuel comprising unreacted fuel and water coming out from a cathode outlet of the fuel cell stack and high concentration fuel supplied from a fuel feeder,
means (150, 152, 190) for determining a concentration value for the mixed fuel;
means (150, 152) for comparing the determined concentration value of the mixed fuel with a reference concentration value;
a conduit (122) for supplying fluid from the cathode outlet of the fuel cell stack to the mixer; and
a heat exchanger (170) for forcibly cooling and condensing fluid flowing in the conduit when the determined concentration value of the mixed fuel is higher than the reference concentration value, whereby to change the mixed fuel concentration utilising water from the cathode outlet.

9. A direct methanol fuel cell system according to claim 8 including:
a controller (150) for measuring an output voltage and/or current (213) of the fuel cell stack, for extracting a concentration value of the mixed fuel corresponding to the measured output voltage and/or current from a previously stored look-up table (207), and for increasing an amount of fluid condensation by operating the heat exchanger when the extracted concentration value of the mixed fuel is higher than a previously stored reference concentration value.

10. The apparatus according to claim 8 or 9, wherein the mixer comprises:
a circulator (180) for receiving the unreacted fuel and water from an anode electrode and a cathode electrode of the fuel cell stack, respectively, and for storing the unreacted fuel and water as a low concentration fuel; and
a fuel mixer for receiving the low concentration fuel and the high concentration fuel and for supplying the mixed fuel of the low concentration fuel and the high concentration fuel to the anode electrode of the fuel cell stack.

11. The apparatus according to claim 9, 10 or 11, further comprising a concentration sensor internally provided in a fuel transferring pipe connecting the circulator and the fuel mixer, and for sensing a concentration of the low concentration fuel passing through the fuel transferring pipe.

12. The apparatus according to claim 10, wherein the controller decreases a time period for supplying the low concentration fuel by a pump from the circulator to the fuel mixer when the extracted concentration value of the mixed fuel is not higher than the reference concentration value.

13. The apparatus according to claim 11, wherein the concentration sensor comprises at least one of an ionic conduction polymer resin or a complex resin.

14. The apparatus according to claim 11, wherein a volume of the concentration sensor is according to a concentration of methanol in the low concentration fuel.

15. The apparatus according to claim 10, wherein the controller increases a supplying amount of the high concentration fuel supplied from the fuel feeder for a predetermined time when the extracted concentration value of the mixed fuel is lower than the reference concentration value.
